# EUROPÄISCHE PATENTANMELDUNG

(11) **EP 2 133 632 A2**
(43) Veröffentlichungstag der Anmeldung: **16.12.2009**
(21) Anmeldenummer: 09005028.7
(22) Anmeldetag: 04.04.2009
(51) Int. Cl.: F24D 19/10

(54) **Solarthermische Anlage umfassend zumindest einen Sonnenkollektor**

(30) Priorität: 11.06.2008 DE 202008007796 U
(71) Anmelder: PAW GmbH & Co. KG, 31789 Hameln (DE)
(72) Erfinder: Heinke, Martin Karl, 31789 Hameln (DE); Vehmeier, Jörg, 32791 Lage (DE)
(74) Vertreter: Jabbusch, Matthias

(57) **Zusammenfassung**

Bei einer solarthermischen Anlage, umfassend zumindest einen Sonnenkollektor, an den Leitungen für ein Wärmeträgermedium angeschlossen sind, ist vorgesehen, dass die vom Sonnenkollektor wegführende Vorlaufleitung für das Solarfluid abschnittsweise in zumindest zwei Teilleitungen aufgeteilt ist, und dass in jeder Teilleitung wenigstens ein Wärmetauscher angeordnet ist.

Diese solarthermische Anlage ist auch für ausgedehnte Sonnenkollektorenfelder mit vertretbarem Aufwand und Kosten einsetzbar.

## Beschreibung

Die Erfindung betrifft eine solarthermische Anlage, umfassend zumindest einen Sonnenkollektor, an den Leitungen für ein Solarfluid angeschlossen sind.

Solarthermische Anlagen werden zur Erwärmung von sekundären Wärmeträgern (Heizungswasser, Trinkwasser, Kühlsolen) eingesetzt. Zu diesem Zweck wird in thermischen Sonnenkollektoren ein Solarfluid erwärmt. Das erwärmte Solarfluid wird über Leitungen in Wärmetauschern mit dem sekundären Wärmeträger in wärmeübertragender Wirkverbindung gebracht, um den sekundären Wärmeträger zu erwärmen.

Aufgrund der steigenden Kosten für primäre Energiestoffe werden Sonnenkollektorenfelder immer größer ausgeführt. Insbesondere für industrielle Anwender werden Sonnenkollektor-Flächen vorgehalten, welche zu einem großen Volumen an im Hochsommer erhitztem Solarfluid führen. Um diese großen Volumina an Solarfluid verarbeiten zu können, sind entsprechend große Wärmetauscher innerhalb oder außerhalb entsprechend dimensionierter Speicher erforderlich. Durch die Größe können Platzprobleme geschaffen werden, zudem sind in den Wärmetauschern oder im Bereich von Speichern erforderlichen Bauteile, wie Pumpen und dergleichen, gleichfalls immer größer auszubilden.

Der Erfindung liegt die Aufgabe zugrunde, eine solarthermische Anlage der eingangs genannten Gattung aufzuzeigen, welche auch für ausgedehnte Sonnenkollektorenfelder mit vertretbarem Aufwand und Kosten einsetzbar ist.

Diese Aufgabe ist erfindungsgemäß dadurch gelöst, dass die vom Sonnenkollektor wegführende Vorlaufleitung für das Solarfluid abschnittsweise in zumindest zwei Teilleitungen aufgeteilt ist und dass in jeder Teilleitung wenigstens ein Wärmetauscher angeordnet ist.

Bei der erfindungsgemäßen solarthermischen Anlage wird nicht ein Wärmetauscher vorgesehen, der bei größerem Volumen an Solarfluid jeweils größer auszubilden wäre, sondern es findet eine Aufteilung in mehrere Wärmetauscher statt. Die mehreren Wärmetauscher sind in voneinander verschiedenen Teilleitungen angeordnet, welche nach Art einer Kaskade aufgebaut sind. Die Teilleitungen verlaufen parallel zueinander, so dass das Solarfluid jeweils nur durch einen Wärmetauscher geführt wird. Die Wärmetauscher können dabei innerhalb eines Speichers angeordnet sein oder auch außerhalb eines Speichers angeordnet sein, dann wird ihnen ein sekundärer Wärmeträger aus dem Speicher über entsprechende Leitungen zugeführt.

Durch die Aufteilung der Vorlaufleitung für das Solarfluid können die mehreren Wärmetauscher für sich jeweils kompakter ausgebildet sein. Es können Standard-Wärmetauscher eingesetzt werden, welche in modularer Weise je nach den Anforderungen angeordnet sind. Standard-Wärmetauscher sind schnell verfügbar, eine jeweilige Spezialanfertigung für eine bestimmte solarthermische Anlage ist vorteilhaft nicht erforderlich. Gleiche Teile ermöglichen eine minimierte Lagerhaltung.

Nach einer ersten Weiterbildung der Erfindung ist vorgesehen, dass die Leitungslängen vom Aufteilungspunkt der Vorlaufleitung zu jedem Wärmetauscher etwa gleich sind. Auf diese Weise erfolgt eine Verrohrung nach "Tichelmann", welche eine gleiche energetische Ausbeutung des den Wärmetauschern zugeführten Solarfluids ermöglicht.

Die erfindungsgemäße solarthermische Anlage kann für ein Trinkwasserleitungsnetz, ein Heizwasserleitungsnetz oder für eine Kombination aus diesen beiden Leitungsnetzen eingesetzt werden. Wenn die Wärmetauscher aus den Speichern herausgenommen werden und in so genannten Übertragungsstationen angeordnet sind, in denen noch Regelinstrumente vorhanden sind, dann kann für den jeweiligen sekundären Wärmeträger ein preiswerter Großspeicher eingesetzt werden.

Vorzugsweise im Bereich der Übertragungsstationen werden in die Leitungen für das Solarfluid nach einer Weiterbildung der Erfindung Pumpen mit Störmeldeausgängen eingesetzt. Vorzugsweise finden Hocheffizenzpumpen Anwendung. Haben diese Pumpen einen Störmeldeausgang, kann eine auftretende Störung von ihnen angezeigt werden. Wenn beispielsweise in einer Teilleitung ein Fluss durch funktionsfähige Pumpen ermöglicht ist, kann in einer parallelen Teilleitung dieser Fluss des Solarfluids durch eine defekte Pumpe zum Stillstand gekommen sein. Dann würde in dieser Teilleitung das Solarfluid stagnieren. Regelmäßig wird eine Pumpe für das Solarfluid und bei externem Wärmetauscher eine Pumpe für den sekundären Wärmeträger eingesetzt. Beide Pumpen weisen vorzugsweise Störmeldeausgänge aus, so dass der funktionssichere Betrieb der solarthermischen Anlage auch von fern überwacht werden kann.

Die Wärmetauscher sind vorzugsweise in einer vertikalen Ausrichtung ihrer Medienströmungskanäle angeordnet, diese Anordnung hat sich als vorteilhaft für eine optimale Übertragung der Wärme herausgestellt.

Ein Ausführungsbeispiel der Erfindung, aus dem sich weitere erfinderische Merkmale ergeben, ist in der Zeichnung dargestellt. Es zeigen:
- Fig. 1:: eine schematische perspektivische Ansicht einer erfindungsgemäßen solarthermischen Anlagen, und
- Fig. 2:: eine Seitenansicht von Bauteilen der solarthermischen Anlage nach Fig. 1.

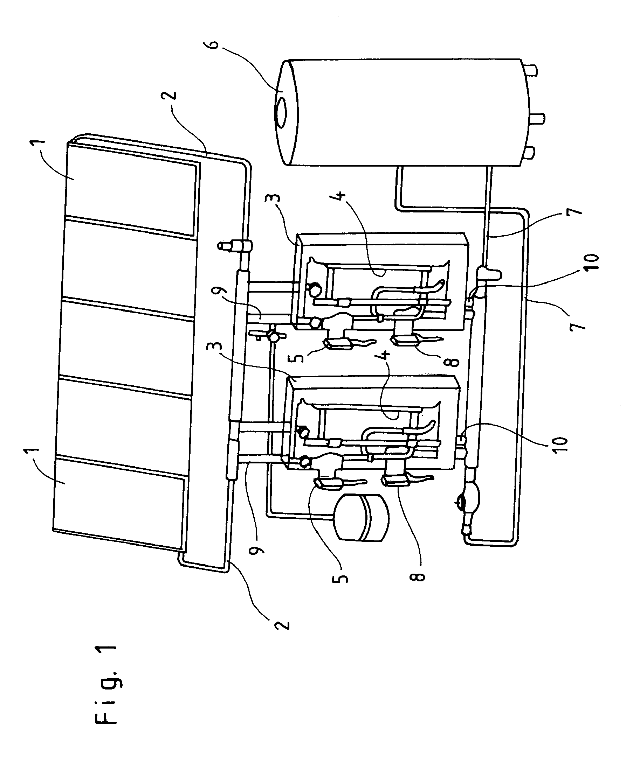

Die solarthermische Anlage in Fig. 1 weist beispielsweise auf einem Dach angeordnete Sonnenkollektoren 1 auf. Über Leitungen 2 wird ein Solarfluid zu Wärmeübertragungsstationen 3 geführt. In jeder Wärmeübertragungsstation 3 ist ein Wärmetauscher 4 angeordnet. Das Solarfluid wird von einer Pumpe 5 gefördert, es fließt durch den Wärmetauscher 4 und über die Leitung 2 wieder zum Sonnenkollektor 1 zurück.

Die solarthermische Anlage weist darüber hinaus einen Speicher 6 auf. Über Leitungen 7 wird ein sekundärer Wärmeträger aus diesem Speicher 6 zu den Wärmeübertragungsstationen 3 geführt und mit Hilfe von Pumpen 8 gleichfalls durch den Wärmetauscher 4 geführt.

Erfindungsgemäß ist vorgesehen, dass die Leitung 2 von den Sonnenkollektoren 1 zu den Wärmetauschern 4 in zwei Teilleitungen 9 aufgeteilt ist. Beide Wärmetauscher 4 sind parallel zueinander angeordnet, es können dabei standardisierte Wärmeübertragungsstaionen 3 eingesetzt werden. In notwendiger Weise ist die Leitung 7 für das Brauchwasser auch in Teilleitungen 10 aufgeteilt.

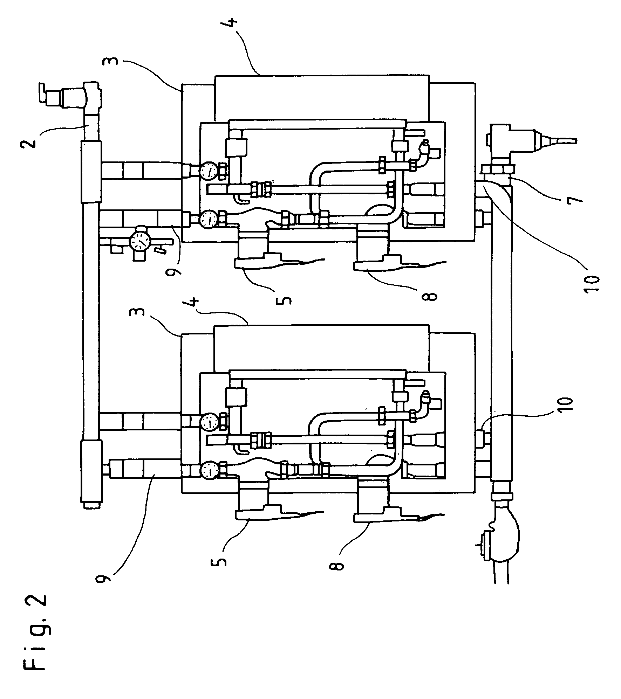

Die Wäremübertragungsstationen 3 sind noch einmal in Figur 2 dargestellt. Die Verrohrung innerhalb der Wärmeübertragungsstationen 3 ist zu erkennen, über die Teilleitungen 2 wird das Solarfluid der solarthermischen Anlage primärseitig von unten in den Wärmetauscher 4 eingeführt, während der sekundäre Wärmeträger über die Teilleitungen 7 sekundärseitig jeweils in den Wärmetauscher 4 eingeführt wird.

## Patentansprüche

1. Solarthermische Anlage, umfassend zumindest einen Sonnenkollektor, an den Leitungen für ein Wärmeträgermedium angeschlossen sind,
**dadurch gekennzeichnet,**
**dass** die vom Sonnenkollektor (1) wegführende Vorlaufleitung (2) für das Solarfluid abschnittsweise in zumindest zwei Teilleitungen (9) aufgeteilt ist, und dass in jeder Teilleitung (9) wenigstens ein Wärmetauscher (4) angeordnet ist.

2. Solarthermische Anlage nach Anspruch 1, **dadurch gekennzeichnet, dass** die Wärmetauscher (4) sekundärseitig mit einem Trinkwasserleitungsnetz (7) wasserleitend verbunden sind.

3. Solarthermische Anlage nach Anspruch 1 oder 2, **dadurch gekennzeichnet, dass** die Wärmetauscher (4) mit einem Speichersystem (6) über Rohrleitungen (7 und 10) verbunden sind.

4. Solarthermische Anlage nach einem der vorhergehenden Ansprüche, **dadurch gekennzeichnet, dass** die Wärmetauscher (4) in einer vertikalen Ausrichtung ihrer Medienströmungskanäle angeordnet sind.
